# EUROPEAN PATENT APPLICATION

(11) **EP 4 663 676 A1**
(43) Date of publication of application: **17.12.2025**
(21) Application number: 24714392.8
(22) Date of filing: 06.02.2024
(51) Int. Cl.: C08G 18/36, C08G 18/42, C08G 18/72, C08G 63/00, C08J 9/12, C08G 18/48

(54) **LIQUID BASE PRODUCT, LIQUID FORMULATED PRODUCT, LIQUID END PRODUCT, RENEWABLE AND BIODEGRADABLE FLEXIBLE POLYMER, PROCESS FOR MANUFACTURING A LIQUID BASE PRODUCT, PROCESS FOR MANUFACTURING A LIQUID FORMULATED PRODUCT, PROCESS FOR MANUFACTURING A LIQUID END PRODUCT, PROCESS FOR MANUFACTURING A RENEWABLE AND BIODEGRADABLE FLEXIBLE POLYMER**

(30) Priority: 07.02.2023 BR 102023002338
(71) Applicant: ISOCARE SOLUÇÕES AMBIENTAIS S/A, 88301-303 Itajaí SC (BR)
(72) Inventor: CUEVAS PERLANZA, Laurêncio, 88.304-100 Itajaí - SC (BR)
(74) Representative: Michalski Hüttermann & Partner Patentanwälte mbB
(86) International application number: PCT/BR2024/050043
(87) International publication number: WO 2024/164058

(57) **Abstract**

The present invention relates to a liquid base product comprising vegetable oil and/or modified vegetable oil, nitrilotriethanol and/or polyether polyol; a liquid formulated product comprising the base product and organic surfactants, catalysts, reagents and/or chemical blowing agent; a liquid end product comprising the formulated product, and/or a physical blowing agent and at least one isocyanate. The present invention further relates to a biodegradable, renewable, flexible polymer formed from a liquid end product. The present invention further relates to a process for manufacturing a biodegradable, renewable, flexible polymer.

## Description

The present invention relates to a biodegradable, renewable, flexible polymer product for manufacturing mattresses, pillows, furniture and various other applications, and to a process for obtaining such a product. More particularly, the present invention relates to a biodegradable, renewable, flexible polymer product, and a process for manufacturing such a product, which serves as a sustainable alternative to products made of fossil-sourced flexible polyurethane (flexible PU), wherein the product of the present invention is fully recyclable, non-toxic and biodegradable.

The present invention refers to a liquid base product, which is formed by combining or reacting one of the ingredients of vegetable oil and/or modified vegetable oil and/or polyether polyol, preferably with nitrilotriethanol and/or possible substitutes thereof.

The present invention refers to a liquid formulated product, which is formed by combining or reacting one of the ingredients of vegetable oil and/or modified vegetable oil and/or polyether polyol, preferably with nitrilotriethanol and/or possible substitutes thereof, further mixing with organic surfactants, catalysts, reagents, blowing agents and/or pure plant latex.

The present invention refers to a liquid end product, which is formed by combining or reacting one of the ingredients of vegetable oil and/or modified vegetable oil and/or polyether polyol, preferably with nitrilotriethanol and/or possible substitutes thereof, further mixing with organic surfactants, catalysts, reagents, blowing agents and/or pure plant latex and isocyanates.

The present invention refers to a renewable, biodegradable, flexible end product, which is formed by combining or reacting one of the ingredients of vegetable oil and/or modified vegetable oil and/or polyether polyol preferably with nitrilotriethanol and/or possible substitutes thereof, further mixing with organic surfactants, catalysts, reagents, blowing agents and/or pure plant latex and isocyanates, the flexible end product being a polymerized solid.

### Description of the State of the Art

Nowadays, global warming and climate changes are reasons for humanity's great concern and efforts to avoid a global climate catastrophe.

Not only public opinion, but also several scientific studies demonstrate that humanity's actions are increasingly interfering with Earth's ecosystems and, for this reason, the search for sustainable solutions is urgent.

One of the main production chains that harm nature is the oil industry which is based on hydrocarbons responsible for a large part of gases harmful to the environment.

In this catastrophic scenario that lies ahead, new clean technologies capable of capturing carbon must be immediately adopted in addition to replacing the use of oil by the modern civilization.

Furthermore, it is important to highlight that petroleum is the basis for the production of polyurethane or polyurethane foams, commonly designated as PU, or fossil-sourced PU. One of the types of PU is Flexible Polyurethane and due to its features, the use thereof is quite varied, being used in vehicle seats, mattresses, pillows, packaging, in the footwear industry, among others.

Oil-derived flexible PU or flexible polyurethane is not biodegradable and is therefore very harmful to the environment when discarded. However, given the significant use of this product and the its increased usage, there is no viable and practical solution available in the state of the art for the safe and non-polluting disposal of this important industrial ingredient.

In the present specification, the term "biodegradable product" should be understood as a product, part, article, accessory, utensil, device, packaging, artifact, among others, having features that allow it to degrade in nature within a reasonable period of time.

Fossil-sourced PU is not biodegradable in addition to being difficult to collect, dispose of and recycle. PU recycling is usually carried out mechanically with crushing and compaction but, even so, it does not return to the features of a new product or is disposed of through incineration, which greatly harms the environment or is even sent to landfills.

Furthermore, wrongly discarded PU ends up being unduly found in large volumes in the oceans worldwide. Small, medium or large pieces of PU unduly end up in bodies of water or are carried into them by the rain, where they are discharged into rivers and finally into the oceans.

These aquatic environments end up suffering from the constant ingress of PU, and as they collide with each other and with other plastics floating on the oceans, PU is fragmented into millions of pieces (microplastics), generating astronomical volumes over the years.

This PU-generated microplastic has the ability to absorb and concentrate toxic chemical compounds, such as agrochemicals, pesticides and heavy metals, such as mercury and lead, present mainly in rivers, lakes and oceans, becoming a potential contaminant especially if consumed by aquatic beings, which makes their presence in the marine environment dangerous since fish, turtles, whales, dolphins and other marine animals mistake these microplastics for marine organisms and end up feeding on them, causing poisoning and putting the entire food chain at risk.

However, there are no known solutions in the state of the art to enable the replacement of PU products in terms of commercial application, use, practical use and suitable disposal. There are no known products capable of replacing the physical features of PU while enabling an adequate disposal thereof into the environment through natural biodegradation.

### Objectives of the Invention

In view of the issues described in the prior art, the present invention is intended to provide a biodegradable, non-toxic and recyclable product to be used in the industry of vehicle seats, mattresses, pillows, packaging, footwear industry, among others, being a sustainable alternative to flexible fossil-sourced PU.

Another objective of the present invention is to provide a product having mechanical strength characteristics similar to those of fossil-sourced flexible PU and also being of low density, being designed to fully replace fossil-sourced flexible PU in all its applications, including the one designated as integral skin.

In this sense, another objective of the present invention is to use clean and renewable sources as the basis for the composition of biodegradable, flexible, renewable polymer by replacing petroleum as the basis for PU (polyurethane).

Also, another objective of the present invention is to enable the use of natural components from renewable sources, that do not compete directly with the food chain, such as, for example, the so-called "frying oil" collected from restaurants, cafeterias, condominiums, among others, resulting in the reuse of products that would otherwise be discarded, hence avoiding contamination of water sources by discarded cooking oil.

Moreover, the product of the present invention is intended to cause no harm to animals when ingested, which is completely different from fossil-sourced PU, which upon ingestion does not decompose in the animal's digestive system, causing intoxication and death of the specimen.

Another objective of the present invention is to reduce carbon emissions into the atmosphere by using components from renewable sources to replace products and applications thereof that use oil sources as the basis for their constitution.

Another objective of the present invention is to provide products in liquid or slurry form for the production of a biodegradable flexible renewable polymer, in order to simplify and increase the efficiency of production chains.

### Brief Description of the Invention

The present invention relates to a liquid base product, which comprises a first base product component reacted with a second base product component, wherein: the first base product component is selected from at least one of: vegetable oil, modified vegetable oil or a combination of these components; and the second base product component is selected from at least one of: nitrilotriethanol, monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components. The liquid base product comprises between 97% and 99.9% by weight of the first base product component and between 0.1% and 3% by weight of the second base product component, based on the total weight of the liquid base product. The hydroxyl index of the liquid base product is in the range of from 45 to 180.

The liquid base product may further comprise a third base product component, wherein the third base product component is a polyether polyol, wherein the amount of polyether polyol is determined by the desired hydroxyl index of the end product. The hydroxyl index of the third base product component may be in a range of from 10 to 80. The hydroxyl index of the first base product component can be in the range of from 1.2 to 180. Amounts of second base product component and the third base product component based on the total weight of the liquid base product are determined by the desired hydroxyl index of the liquid base product based on the hydroxyl index of the first base product component. The second base product component can be selected from at least one of: nitrilotriethanol, nitrilodiethanol, nitrilomonoethanol, 1,4-butanediol or a combination thereof. The second base product component can be selected from at least one of: monoethylene glycol, diethylene glycol, triethylene glycol, tetraethylene glycol or a combination of these components. The second base product component can be selected from at least one of: propylene glycol, dipropylene glycol, tripropylene glycol or a combination of these components. The second base product component can be selected from at least one of: dimethylolpropane, pentaerythritol, sorbitol or a combination of these components.

The present invention relates to a liquid formulated product, which comprises the liquid base product mixed with a blowing agent and at least one of organic surfactants, catalysts and/or reagents. The blowing agent can be water. The organic surfactant can be selected from at least one of: silosan silicone and/or water-soluble silosan silicone. The catalyst can be selected from at least one of: tin octoate, dibutyltin dilaurate, cobalt octoate, bismuth octoate, bismuth trineodecanoate, diazabicyclooctane, triethylenediamine, dimethylcyclohexylamine, wherein the catalyst comprises a metallic nature or an aminic nature. The reagent can be selected from at least one of: nitrilotriethanol, preferably, and/or monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components.

The present invention relates to a liquid end product, which comprises the liquid formulated product reacted with an isocyanate. The isocyanate can be MDI, TDI, NDI, HDI, IPDI, HMDI, TPMTI and/or PDI or even a mixture of the cited isocyanates, wherein the isocyanate comprises NCO, nitrogen-carbon-oxygen, in the range of from 10% to 50%. The liquid end product may comprise between 31% and 93% liquid formulated product and between 7% and 69% isocyanate, based on the total weight of the liquid end product. The liquid end product may further comprise a physical blowing agent. The physical blowing agent can be selected from at least one of: hydrofluorolefins, methylal, n-pentane, methylene chloride, isopentane, cyclopentane, hydrogenated chlorofluorocarbon or a combination of these components.

The present invention relates to a renewable and biodegradable flexible polymer, which comprises the liquid end product polymerized in solid state.

The present invention relates to a process for manufacturing a liquid base product, which comprises the steps of: heating a first base product component to a temperature between 50°C and 70°C, wherein the first base product component is selected from at least one of: vegetable oil and/or modified vegetable oil; adding a second base product component, wherein the second base product component is selected from at least one of: monoethylene glycol, diethylene glycol, triethylene glycol, tetraethylene glycol, propylene glycol, dipropylene glycol, tripropylene glycol, 1,4-butanediol, nitrilotriethanol, nitrilodiethanol, nitrilomonoethanol, pentaerythritol, dimethylolpropane, sorbitol; heating the combination of the first base product component with the second base product component to a temperature between 90°C and 115°C if the melting point of the second base product component is below 115°C, or to a temperature greater than 115°C if the melting point of the second base product component is higher than 115°C; stirring the combination of the first base product component with the second base product component for a period of time between 20 and 40 minutes at the temperature of the previous step. The process of manufacturing a liquid base product may further comprise the steps of: cooling to room temperature the product obtained after the step of stirring the combination; adding a third base product component, wherein the third base product component is a polyether polyol; and stirring the combination comprising the third base product component for a period of time between 20 and 40 minutes at room temperature.

The present invention relates to a process for manufacturing a liquid formulated product, which comprises generating a liquid base product, stirring the liquid base product with at least one of: organic surfactants, catalysts and/or reagents, and gradually inserting a blowing agent during the period of stirring the base product with organic surfactants, catalysts and/or reagents.

The present invention relates to a process for manufacturing a liquid end product, which comprises: generating the liquid formulated product; and stirring the liquid formulated product with an isocyanate until a reaction between the components takes place.

The present invention relates to a process for manufacturing a biodegradable flexible renewable polymer, which comprises: generating a liquid end product; and shaping the liquid end product by means of a polymerization reaction to achieve a biodegradable flexible renewable polymer.

### Detailed description of the invention

Firstly, it should be noted that the term "preferred" used herein is inteded to characterize a particularly efficient embodiment of the invention from among the multiple possible ones. Said term "preferred" should not be understood to limit the possible embodiments of the present invention, that is, it should not be understood as "imperative" or "obligatory" for carrying out the present invention.

In the context of the process of the present invention, the term "phase" should be understood similarly to the term "step", being used in the context of the present invention as a step that may comprise one or more steps or substeps.

The term "generate" should be understood in the context of the present invention as conceiving, producing or obtaining something. It must, therefore, be understood broadly rather than being limited to a narrow understanding of its meaning.

By the term "renewable product" is meant a product whose sources are natural sources that regenerate, that is, renewable sources, which replace the use of fossil-sourced fuels.

By the term "room temperature" is meant the normal temperature, i.e., about 20°C.

The present invention relates to a liquid base product comprising a first base product component combined and/or reacted with a second and/or a third base product component.

In one embodiment of the present invention, the liquid base product comprises a first base product component reacted with a second base product component.

In another embodiment of the present invention, the liquid base product comprises a first base product component reacted with a second base product component and mixed with a third base product component.

The first base product component is selected from at least one of: vegetable oil, modified vegetable oil or a combination of these components.

In one embodiment, the second base product component is selected from at least one of: nitrilotriethanol, preferably, and/or monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components.

In the present invention, substitutes or countertypes or alternative components to nitrilotriethanol are monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol or sorbitol. Therefore, although nitrilotriethanol is mentioned as the preferred component, nitrilotriethanol substitutes can also be used, either alone or in combination with each other, to achieve the intended base product, formulated product, liquid end product and flexible end product.

In one embodiment, the second base product component is selected from at least one of: nitrilotriethanol, nitrilodiethanol, nitrilomonoethanol, 1,4-butanediol or a combination thereof.

In one embodiment, the second base product component is selected from at least one of: monoethylene glycol, diethylene glycol, triethylene glycol, tetraethylene glycol or a combination of these components.

In one embodiment, the second base product component is selected from at least one of: propylene glycol, dipropylene glycol, tripropylene glycol, or a combination of these components.

In one embodiment, the second base product component is selected from at least one of: dimethylolpropane, pentaerythritol, sorbitol, or a combination of these components.

In other embodiments of the liquid base product of the present invention, the different sets of components cited above for the second base product component may be combined with each other to form a new embodiment of the liquid base product.

The third base product component is selected from at least one of: polyether polyols of various hydroxyl indices. That is, a polyether polyol comprising a hydroxyl index suitable for the desired application to generate a liquid base product having the desired hydroxyl index, as specified below.

In one embodiment, the hydroxyl index of the first base product component is in a range between 1.2 and 180 and the hydroxyl index of the liquid base product is in a range between 45 and 180. The amount of the second and/or third base product components is determined by the desired hydroxyl index of the liquid base product based on the hydroxyl index of the first base product component.

In one embodiment, the hydroxyl index of the third base product component, namely, the polyether polyols, is in a range between 10 and 80, or preferably between 25 and 56. It should be noted that, optionally, one can combine polyether polyols having different hydroxyl indices to achieve the desired hydroxyl index for the third base product component.

In one embodiment, the amount of the first base product component, i.e., vegetable oil and/or modified vegetable oil, is 67%, 68%, 69%, 70%, 71%, 72%, 73%, 74%, 75%, 76%, 77,5%, 78%, 79%, 80%, 81%, 82%, 83%, 84%, 85%, 86%, 87%, 88%, 89%, 90%, 91%, 92%, 93%, 94%, 95%, 96%, 97%, 98%, 99% or 99.9% by weight, based on the total weight of the liquid base product, or any range between the cited amounts. In a preferred embodiment, the amount of the first base product component is between 97% and 99.9% by weight, based on the total weight of the liquid base product.

In one embodiment, the amount of the second base product component, i.e., nitrilotriethanol and/or substitutes thereof is preferably 0.1%, 1%, 2% or 3%, or any range between the cited values, such as, for example, between 0.1% and 3% by weight, based on the total weight of the liquid base product.

In one embodiment, the amount of polyether polyol is preferably 0%, 1%, 2%, 3%, 4%, 5%, 6%, 7%, 8%, 9% 10%, 11%, 12%, 13%, 14%, 15%, 16%, 17%, 18%, 19%, 20%, 21%, 22%, 23%, 24%, 25%, 26%, 27%, 28%, 29% and 30% by weight, or any range between the cited values based on the total weight of the liquid base product, such as, for example, between 0% and 30%.

The present invention also relates to a liquid formulated product comprising the liquid base product mixed with a chemical blowing agent and at least one of: organic surfactants, catalysts, and/or reagents.

In one embodiment, the amount of liquid base product comprised in the liquid formulated product is preferably 41.78% to 99.80% by weight, based on the total weight of the liquid formulated product. In one embodiment that comprises the blowing agent, the amount of blowing agent is preferably 0.01% to 23.24% by weight based on the total weight of the liquid formulated product, such weight being a possible sum of physical and chemical blowing agents. The amount of at least one of: organic surfactants, catalysts and/or reagents (considering the sum of these elements, if present alone or in combination with each other), is preferably 0.01% to 47.78% by weight based on the total weight of the liquid formulated product.

The catalyst is selected from at least one of: tin octoate, dibutyltin dilaurate, cobalt octoate, bismuth octoate, bismuth trineodecanoate, diazabicyclooctane, triethylenediamine, dimethylcyclohexylamine or further examples thereof, of both metallic nature and an aminic nature.

The organic surfactant is selected from at least one of: silosan silicone and/or water-soluble silosan silicone.

The reagent is selected from at least one of: preferably, nitrilotriethanol and/or monoethylene glycol, diethylene glycol, triethylene glycol, tetraethylene glycol, propylene glycol, dipropylene glycol, tripropylene glycol, 1,4-butanediol, nitrilodiethanol and/or nitrilomonoethanol, dimethylolpropane, pentaerythritol or sorbitol.

The present invention further relates to a liquid end product comprising the liquid formulated product reacted with an isocyanate. The isocyanate can be MDI, wherein MDI comprises NCO, nitrogen-carbon-oxygen, in the range of from 10% to 50%. The liquid end product may comprise between 31% and 93%, preferably between 59% and 89% and, more preferably, between 60% and 85% of the total weight of the liquid formulated product. The amount of isocyanate, in turn, is between 7% and 69%, preferably between 11% and 41% and, more preferably, between 15% and 40% of the total weight of the liquid formulated product.

In one embodiment, the amount of isocyanate is preferably 7%, 8%, 9% 10%, 11%, 12%, 13%, 14%, 15%, 16%, 17%, 18%, 19%, 20%, 21%, 22%, 23%, 24%, 25%, 26%, 27%, 28%, 29%, 30% 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68% or 69%, or any range between the cited values.

The present invention further relates to a process for manufacturing a biodegradable flexible renewable polymer comprising generating a base product, wherein generating the base product comprises stirring a first base product component with a second base product component until a reaction of the components takes place, wherein the first and second components react with each other to generate the base product, and/or the result of the reaction of the first and second components is mixed with a third component, wherein the first base product component is selected from of at least one of: vegetable oil and/or modified vegetable oil, the second base product component is selected from at least one of: monoethylene glycol, diethylene glycol, triethylene glycol, tetraethylene glycol, propylene glycol, dipropylene glycol, tripropylene glycol, 1,4-butanediol, nitrilotriethanol, nitrilodiethanol, nitrilomonoethanol, dimethylolpropane, pentaerythritol and/or sorbitol, and the third base product component is selected from at least one of: polyether polyols of various hydroxyl indices. The process of manufacturing a biodegradable flexible renewable polymer further comprises generating a formulated product, wherein generating the formulated product comprises: stirring the base product with organic surfactants, catalysts and/or reagents, and gradually adding a chemical blowing agent during the period of time of stirring the base product with organic surfactants, catalysts and/or reagents. The process for manufacturing a biodegradable flexible renewable polymer further comprises generating a liquid end product wherein the step of generating the liquid end product comprises stirring the liquid formulated product with one or more different types of isocyanate.

The process of generating the base product comprises the preliminary steps of dosing and introducing the first base product component, that is, vegetable oils and/or modified vegetable oil into a reactor and/or mixer. In one embodiment, the reactor can be a heater reactor.

The process of generating the base product comprises a step of heating the first base product component, wherein the first base product component can be heated until it reaches a stirring temperature of between 50°C and 70°C prior to being stirred with the second base product component.

In an examplary embodiment, if nitrilotriethanol is chosen, for example, to balance the hydroxyl index of the product, a heater reactor can be used, where the heater is activated and heats the components present inside the reactor until they reach a stirring temperature, wherein the stirring temperature of the present example being a temperature between 50°C and 70°C.

The process of generating the base product further comprises a step of stirring the first base product component with the second base product component, wherein the stirring takes place, preferably, at a stirring temperature comprised between 90°C and 115°C, for a stirring time between 20 minutes and 40 minutes.

A stirring temperature comprised between 90°C and 115°C is particularly relevant for some possible second base product components, such as, for example, nitrilotriethanol. However, as described, an alternative component can be used as a substitute for nitrilotriethanol. If the alternative component or substitute for nitrilotriethanol is pentaerythritol, the stirring temperature must be between 250°C and 300°C.

In one embodiment, if the chosen alternative component has a melting point above the flash point of the oil, a step of injecting an antioxidant component, such as, for example, nitrogen, into the reaction must be carried out.

In one embodiment, after cooling the product resulting from stirring/reacting the first base product component with the second base product component to room temperature, the third base product component can be added at room temperature.

If polyether polyol is added to the liquid base product to balance the stoichiometry and obtain the desired hydroxyl index, stirring can only be carried out in a mixer at room temperature with a stirring and mixing time between 20 and 40 minutes, or preferably between 25 and 35 minutes.

At the end of the steps of adding, dosing and heating the vegetable oils and/or modified vegetable oil, adding and dosing nitrilotriethanol or its possible alternative components, as cited above, heating, stirring and cooling the base product in the reactor, after optionally adding and dosing the polyether polyol and stirring the base product components inside the reactor or mixer at room temperature, the liquid base product is obtained.

Alternatively, a possible step of generating the base product consists of subjecting the first component to heating and recirculating it over a column containing molecular sieve granules having porosities of from 3 to 13 angstroms. The heating temperature must be maintained between 100 and 140°C and the process of contacting the first component with the molecular sieve must only take place after 30 minutes that the temperature has stabilized at the desired value. Recirculation of the first component in the column containing the molecular sieve must be sufficient for the hydroxyl index value of interest be reached.

The process of generating the liquid formulated product comprises: stirring the liquid base product with organic surfactants, catalysts and/or reagents, and gradually adding a chemical blowing agent during the period of time of stirring the base product with organic surfactants, catalysts and/or or reagents. The stirring period of the process of generating the liquid formulated product is comprised in a time range between 2 minutes and 120 minutes.

In a preferred embodiment, the catalyst is selected from at least one of: tin octoate, dibutyl tin dilaurate, cobalt octoate, bismuth octoate, bismuth trineodecanoate, diazabicyclo-octane, triethylenediamine, dimethylcyclohexylamine or other examples, both metallic and aminic in nature; the organic surfactant being selected from at least one of: silosan silicone and/or water-soluble silosan silicone; the reagent being selected from at least one of: nitrilotriethanol, preferably, and/or monoethylene glycol, diethylene glycol, triethylene glycol, tetraethylene glycol, propylene glycol, dipropylene glycol, tripropylene glycol, 1,4-butanediol, nitrilodiethanol and/or nitrilomonoethanol, dimethylolpropane, pentaerythritol or sorbitol.

The organic reactants and surfactants used in the process of generating the liquid formulated product are basically responsible for facilitating and improving efficiency of the reaction of the base product with the formulated product components. Catalysts are responsible for speeding up the reaction and ensuring that the features of interest for the end product can be achieved. Organic reactants and surfactants are the components of the formulated product that will react massively, increasing the volume and resilience of the solid end product, when reacted with isocyanate. Silicone is responsible for cross-linking the opening of cells.

In a preferred embodiment, the chemical blowing agent is water. The water component is a chemical blowing agent and must be added into the formulated product gradually throughout the stirring period. Gradually adding water throughout the period of stirring the base product with the organic surfactants, catalysts and/or reagents means introducing multiple doses or percentages of this component, either continuously or not, into the mixture over the period of time in which the stirring takes place. In one embodiment of the present invention that comprises water as a blowing agent, the amount of water is between 0.01% and 2.35% by weight based on the total weight of the liquid formulated product.

In alternative embodiments, other alternative blowing agents to the preferred chemical blowing agent, such as physical blowing agents, can be used in liquid or gas form. As a non-exhaustive example of physical blowing agent, hydrofluorolefins, methylal, n-pentane, methylene chloride, isopentane, cyclopentane and/or hydrogenated chlorofluorocarbon can be used.

The above-mentioned components for the preferred embodiment of the processes of the present invention are the main possible components for formulating the base product and the formulated product. However, it should be noted that in alternative embodiments, other alternative components may perform the same chemical function as the components already cited in the present invention.

The process of generating the liquid formulated product optionally comprises a step of adding a dye that is responsible for adding color to the formulated product and, accordingly to the end product. Preferably, the dyes used in the present invention are vegetable dyes or water-based dyes.

The process of generating the liquid formulated product optionally comprises a step of adding a flame retardant and/or smoke suppressant.

The process of generating a liquid end product comprises stirring the liquid formulated product with an isocyanate or different types of isocyanate. In one embodiment, the process of generating the liquid end product may comprise a step of introducing a physical blowing agent, wherein the physical blowing agent is selected from at least one of: hydrofluoroolefins, methylal, n-pentane, methylene chloride, isopentane, cyclopentane and/or hydrogenated chlorofluorocarbon.

In a preferred embodiment, the isocyanate is MDI. MDI is an organic methylene diphenyl diisocyanate comprising a nitrogen-carbon-oxygen NCO ranging from 10% to 33.56%. The MDI effect on the product is a reactant effect. MDI is a reactant that when combined with the liquid formulated product causes an exothermic reaction, massively increasing the volume of the final mixture. In this instance, the liquid end product may be filled into a mold and polymerized to form a flexible solid foam, which is the final flexible solid product.

Although mention is made of MDI, other isocyanates can be used in alternative embodiments of the present invention. Alternatively to using MDI as a reagent, and as long as it does not change the characteristic properties of the end product such as toxicity and biodegradability, other types of isocyanates may be used as reagents, for example: 2,4-toluene diisocyanate or 2,6-toluene diisocyanate (TDI); hexamethylene diisocyanate (HDI); isophorone diisocyanate (IPDI); 4,4-dicyclo-hexylmethane diisocyanate (HMDI); naphthalene 1,5-diisocyanate (NDI); triphenylmethane 4,4,4-triisocyanate (TPMTI) and; 1,4-phenylene diisocyanate (PDI). Furthermore, similarly to the already cited reagents it is possible to use a blend of different isocyanates and variations having structural modifications of the cited molecules.

In one embodiment of the process of generating a liquid end product, an application equipment can be used. In one embodiment, the application equipment comprises two working tanks with at least one inlet and one outlet. The application equipment is basically a container configured to cause the reaction of isocyanate with the liquid formulated product at a certain temperature. The reaction is independent of the temperature, however the temperature may affect the final characteristics of the solid product. Furthermore, the reaction time may vary considerably as it depends on numerous factors, such as size of the mold, type of application, desired final characteristic, among others.

In one embodiment, the reaction temperature of the liquid formulated product with isocyanate is between 20°C and 45°C.

In this sense, the application equipment is also the equipment of the present invention responsible for applying the liquid formulated product and the isocyanate into the desired mold or application site. Examples of application equipment used in the present embodiment include carousel-type application equipment and low and high pressure injection molding machines.

When the objective is to manufacture vehicle seats, the application equipment can be, for example, an injection molding machine that heats, massively mixes and injects the liquid end product into molds of specific shapes where polymerization will take place. The application equipment can be, for example, large molds with no specific shapes, for the final solid product be cut into pieces for a specific application. Such a step can also be understood as a step of generating the end product in a flexible solid state by means of forming the final combination through a polymerization reaction.

The amount of liquid formulated product added into one of the working tanks is between 31% and 93%, preferably between 59% and 89% and, more preferably, between 60% and 85% by weight, based on the total weight of the liquid end product in liquid state. The amount of isocyanate added into the other working tank is between 7% and 69%, preferably between 11% and 41% and, more preferably, between 15% and 40% by weight, based on the total weight of the liquid end product in liquid state.

In the application phase depending on the type of application an optional step of waiting for the solidification time is carried out after applying the liquid end product. The solidification time is from 1 minute to 10 minutes. Solidification, which is the polymerization from the liquid to the solid state, must respect this variation in the handling time, depending on the complexity of the part to be produced. After the solidification time, the end product will be polymerized having passed from liquid to solid state. When necessary, the end product must be subjected to a calendering process (roller or press) to expel internal gases through cellular disruption of the material.

In one embodiment, the process of manufacturing the biodegradable flexible renewable polymer of the present invention comprises shaping the liquid end product through a polymerization reaction to achieve a solid end product. In one embodiment, the step of generating the end product comprises dosing the liquid formulated product with an isocyanate into the injector or its possible substitutes, reacting the liquid formulated product and the isocyanate, and injecting or applying the combination of liquid formulated product and isocyanate to achieve a step of generating a solid end product, which is a biodegradable flexible renewable polymer.

The components combined and reacted in liquid state in the end product are applied and shaped to generate the end product in solid state. In other words, the end product, which is the biodegradable, renewable, flexible polymer of the present invention, comprises a solid state that is obtained from the liquid end product, which comprises the components described above.

In general, the process of manufacturing the biodegradable, renewable, flexible polymer is divided into three phases: the first phase where a step is carried out to generate the base product; a second phase where a step of generating the formulated product is carried out; and a third phase where a stage of generating the end product is carried out. More specifically, the main steps or phases of the process of obtaining the biodegradable, renewable, flexible polymer of the present invention comprise: generating a base product, wherein generating the base product comprises combining/reacting at least one vegetable oil and/or modified vegetable oil with nitrilotriethanol or possible substitutes thereof, and/or polyether polyol; generating a formulated product, wherein generating the formulated product comprises stirring/mixing the base product with organic surfactants, catalysts, reagents and/or a chemical blowing agent; generating a liquid end product, wherein generating the liquid end product comprises stirring/mixing the formulated product with isocyanate and/or some physical blowing agent; and generating an end product in solid state by dosing, heating the massive mixture and injecting to achieve the shape of the end mixture through the polymerization process.

The base product or liquid base product can be understood as a product resulting from the first stage of the process of the present invention. The base product can be used and/or sold individually to later generate the formulated product or other purposes not previously identified in the present document.

The formulated product or liquid formulated product can be understood as a product resulting from the second phase of the process of the present invention. The formulated product can be used and/or sold individually to later generate the end product, either as a liquid or flexible product, or other purposes not previously identified in the present document.

The end product or liquid end product can be understood as a product resulting from the third phase.

The term "solid end product" will also be used as the biodegradable, renewable, flexible polymer.

The base product is a liquid product resulting from the reaction that comprises at least two products to produce the liquid base. Such base product is formed by reacting the vegetable oil and/or modified vegetable oil, and/or with nitrilotriethanol and/or with polyether polyol. As an alternative to nitrilotriethanol, monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, or sorbitol can be used, which are listed herein by way of example only, not being exhaustive.

To form the base product that can comprise the biodegradable, renewable, flexible polymer as described in the present invention, a hydroxyl index between 45 and 180 has to be achieved. In a preferred embodiment, the hydroxyl index is preferably 45, 50, 55, 60, 65, 70, 75, 80, 85, 90, 95, 100, 105, 110, 115, 120, 125, 130,135, 140, 145, 150, 155, 160, 165, 170, 175 or 180, or any range between the cited values.

The hydroxyl index referred to in the above paragraph is a determining factor for one to achieve the features of the end, biodegradable, renewable, flexible polymer. All vegetable oils have different hydroxyl indices, ranging between approximately 1.2 and 165. Regardless of the hydroxyl index that the vegetable oil and/or modified vegetable oil may have, nitrilotriethanol and/or polyether polyol, or substitutes thereof must be added until the combination reaches the hydroxyl index within the already mentioned parameters, i.e., more preferably between 45 and 180.

Both the polyether polyol and nitrilotriethanol serve to balance and increase or decrease the hydroxyl index. Thus, nitrilotriethanol increases the hydroxyl index of the basic component while polyether polyol decreases it. Specifically, treatment with nitrilotriethanol favors the biodegradability of the solid, biodegradable, renewable, flexible polymer material/product that is the object of the present invention.

The formulated product is a liquid product resulting from the liquid consubstantiation of the liquid base product described above with the following components: chemical blowing agent, organic surfactants, catalysts and reagents to form a liquid formulated product, which upon being subsequently reacted to an isocyanate catalyst will form the biodegradable, renewable, flexible polymer.

In one embodiment, the biodegradable, renewable, flexible polymer comprises the following raw materials: vegetable oil and/or modified vegetable oil; and/or polyether polyol, nitrilotriethanol; water; organic surfactant and/or catalyst and/or reagent; and isocyanate.

In one embodiment, the biodegradable, renewable, flexible polymer comprises the following raw materials: vegetable oil and/or modified vegetable oil; and/or polyether polyol, nitrilotriethanol; water; organic surfactant and/or catalyst and/or reagent; and/or pure plant latex/ and isocyanate.

In one embodiment, the amount of isocyanate is preferably 7%, 8%, 9% 10%, 11%, 12%, 13%, 14%, 15%, 16%, 17%, 18%, 19%, 20%, 21%, 22%, 23%, 24%, 25%, 26%, 27%, 28%, 29%, 30% 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68% or 69%, or any range between the cited values.

From a reaction of blending liquids, a liquid end product of the product polymerizes through an exothermic reaction, forming a solid in the form of flexible foam for use, for example, in mattresses and pillows. Product degradation takes place within 6 months and product density is between 15 kg/m³ and 200 kg/m³.

In one embodiment, the amount of liquid formulated product comprised in the end product is preferably 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92% or 93%, such as between 31% and 93% by weight, or any other range between the cited values.

The ratio of isocyanate to polyol in the end product may vary according to the index of interest. In summary, the greater the amount of isocyanate in the end product, the greater the rigidity of the biodegradable, renewable, flexible polymer. Therefore, for a less rigid solid biodegradable, renewable, flexible polymer, the isocyanate ratio in the end product should be lower.

Among the base product components, at least one component comprises at least one type of vegetable oil and/or modified vegetable oil. The vegetable oils used in the present embodiment include any of the cited oils, in a non-exhaustive manner: frying oil, cooking oil, cottonseed oil, macauba oil, palm oil, soybean oil, corn oil, canola oil, sunflower oil, rapeseed oil or castor oil. Alternatively, you can use a mixture of vegetable oils as base product components.

Any of the oils mentioned above when reacted with nitrilotriethanol or one of the described substitutes and/or polyether polyol to form the base product must achieve the previously mentioned hydroxyl indices as required for the present invention.

Among the base product components, in addition to vegetable oil and/or modified vegetable oil, one component comprises polyether polyol. In the formulation, polyether polyol is responsible for maintaining the combination molecular chain at a low hydroxyl level, obtaining an end product having both flexibility and resilience.

Likewise, another component that may be included in the base product is nitrilotriethanol, which is an organic chemical compound presented in a viscous liquid state, being soluble in water and miscible in most oxygenated organic solvents. It is used to react with vegetable oil in order to adjust the hydroxyl index to achieve the parameter of interest.

The industrial process for producing the products or mixtures that form the biodegradable, renewable, flexible polymer of the present invention has similarities with the process described in document number BR102023000639-6, wherein such document can be used to clarify any doubts and for a better understanding of details of the process of the present invention. However, there are major differences in the processes, which correspond to different compositions, execution of steps and step parameters (such as temperatures and times), given that the process described in document no. BR102023000639-6 is aimed at achieving a rigid product and the process of the present invention is directed to obtaining a flexible product.

The end biodegradable product obtained in solid state has its physical-chemical composition determined by an exothermic reaction, being a consequence of the end product corresponding to the chosen ratio of formulated product, depending on the desired feature, and isocyanate and consequent polymerization.

The flexible solid end product has a density between 15 kg/m³ and 200 kg/m³, making it possible to obtain the end product in several different density and formulation ranges.

To understand the elastomeric features of the end product, the liquid end product can generate a solid end product having a density between 300 kg/m³ and 800 kg/m³.

The biodegradable end product of the present invention has the feature of physically decomposing under certain scenarios. This is because product decomposition during use is not desirable. For example, it is not desirable for the end product applied to a mattress or pillow to decompose. Therefore, the biodegradable product of the present invention decomposes only when it is under a decomposing condition. The decomposition condition takes place when the biodegradable product is exposed to microorganisms and exposed to fat-degrading biological agents, which are found in the soil and landfills or in anaerobic reactors.

Accordingly, the biodegradable product of the present invention has a great advantage compared to other prior art products by decomposing quickly when discarded into the environment, where it will be under a decomposing condition. In a preferred embodiment, under the decomposing condition, the biodegradable product of the present invention begins to decompose within 15 days.

The flexible biodegradable product has been subjected to degradation tests in anaerobic and aerobic environments, as well as toxicity tests in fish and microalgae. In the anaerobic biodigestion test, a flexible biodegradable product was placed in a reactor together with nutrients and inoculum (bacteria colony), and the release of biogas was continuously monitored. The result was an increasing biogas release curve (mainly methane and CO₂), indicating the non-toxicity of the foam in this environment. After 60 days of the experiment, degradation of the flexible foam was 44.21%.

To assess aerobic degradation and toxicity, microalgae of the genus *Chlorella* sp., which was chosen for being a biological indicator susceptible to toxic agents, were used in a controlled medium. The result was positive for non-toxicity, the algae exposed to the environment with the biodegradable flexible product had the same life cycle as the control samples.

As a complement to the study, the biodegradable flexible product was used as a fish feed supplement for 54 days. Non-toxicity of the biodegradable flexible product was once again observed, as there was no death of the fish and no pathologies detected during the inspection of the test group.

In relation to the degradation study results, a greater degradation of the biodegradable flexible product was observed in an aerobic environment, which degraded by 31.93% after 37 days.

Therefore, the biodegradable product of the present invention has excellent biodegradability when compared to flexible foams from non-renewable fossil sources.

Additionally, it should be noted that for all values and all value ranges of any of the aforementioned features there may be a variation of up to plus or minus 5%. This means that any of the values or ranges may vary within any range up to 5%, for example, 1%, 2%, 3%, 4%, 5% or any decimal value comprised of more or less of the values or ranges of defined values. In a variation instance, there will naturally be a compensation in the formulations so that the total value obtained is maintained.

Having described exemplary embodiments of the present invention, it should be understood that the scope of the present invention encompasses other possible variations, being limited - only by the content of the claims, including any possible equivalents thereof.

## Claims

1. A liquid base product, **characterized in that** it comprises a first base product component reacted with a second base product component, wherein:
the first base product component is selected from at least one of: vegetable oil, modified vegetable oil or a combination of these components; and
the second base product component is selected from at least one of: nitrilotriethanol, monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components,
wherein the liquid base product comprises between 97% and 99.9% by weight of the first base product component and between 0.1% and 3% by weight of the second base product component, based on the total weight of the liquid base product,
wherein the hydroxyl index of the liquid base product is in the range of from 45 to 180.

2. Liquid base product according to claim 1, **characterized in that** it further comprises a third base product component, wherein the third base product component is a polyether polyol, wherein the amount of polyether polyol is determined by the desired hydroxyl index for the liquid base product.

3. Liquid base product according to claim 2, **characterized in that** the hydroxyl index of the third base product component is in the range between 10 and 80.

4. Liquid base product according to any one of claims 1 to 3, **characterized in that** the hydroxyl index of the first base product component is in the range between 1.2 and 180.

5. Liquid base product according to any one of claims 1 to 4, **characterized in that** amounts of the second base product component and the third base product component based on the total weight of the liquid base product are determined by the desired hydroxyl index of the liquid base product based on the hydroxyl index of the first base product component.

6. Liquid base product according to any one of claims 1 to 5, **characterized in that** the second base product component is selected from at least one of: nitrilotriethanol, nitrilodiethanol, nitrilomonoethanol, 1,4-butanediol or a combination of these components.

7. Liquid base product according to any one of claims 1 to 5, **characterized in that** the second base product component is selected from at least one of: monoethylene glycol, diethylene glycol, triethylene glycol, tetraethylene glycol or a combination of these components.

8. Liquid base product according to any one of claims 1 to 5, **characterized in that** the second base product component is selected from at least one of: propylene glycol, dipropylene glycol, tripropylene glycol or a combination of these components.

9. Liquid base product according to any one of claims 1 to 5, **characterized in that** the second base product component is selected from at least one of: dimethylolpropane, pentaerythritol, sorbitol or a combination of these components.

10. A liquid formulated product, **characterized in that** it comprises the liquid base product, as defined in any one of claims 1 to 9, mixed with a blowing agent and at least one of organic surfactants, catalysts and/or reagents.

11. Liquid formulated product according to claim 10, **characterized in that** the blowing agent is water.

12. Liquid formulated product according to claim 10 or 11, **characterized in that** the organic surfactant is selected from at least one of: silosan silicone and/or water-soluble silosan silicone.

13. Liquid formulated product according to any one of claims 10 to 12, **characterized in that** the catalyst is selected from at least one of: tin octoate, dibutyl tin dilaurate, cobalt octoate, bismuth octoate, bismuth trineodecanoate, diazabicyclo octane, triethylene diamine, dimethylcyclo hexylamine, wherein the catalyst is of either metallic nature or aminic nature.

14. Liquid formulated product according to any one of claims 10 to 13, **characterized in that** the reagent is selected from at least one of: preferably nitrilotriethanol, and/or monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components.

15. A liquid end product, **characterized in that** it comprises the liquid formulated product, as defined in any one of claims 6 to 10, reacted with an isocyanate.

16. Liquid end product, according to claim 15, **characterized in that** the isocyanate is MDI, TDI, NDI, HDI, IPDI, HMDI, TPMTI and/or PDI or even a blend of the cited isocyanates, wherein the isocyanate comprises an NCO, nitrogen-carbon-oxygen, ranging from 10% to 50%.

17. Liquid end product, according to claim 15 or 16, **characterized in that** it comprises between 31% and 93% liquid formulated product and between 7% and 69% isocyanate based on the total weight of the liquid end product.

18. Liquid end product according to any one of claims 15 to 17, **characterized in that** it further comprises a physical blowing agent.

19. Liquid end product according to any one of claims 15 to 18, **characterized in that** the physical blowing agent is selected from at least one of: hydrofluorolefins, methylal, n-pentane, methylene chloride, isopentane, cyclopentane, hydrogenated chlorofluorocarbon or a combination of these components.

20. A renewable and biodegradable flexible polymer, **characterized in that** it comprises the liquid end product, as defined in any one of claims 15 to 19, polymerized in a solid state.

21. A process for manufacturing a liquid base product, **characterized in that** it comprises:
heating a first base product component to a temperature between 50°C and 70°C, wherein the first base product component is selected from at least one of: vegetable oil and/or modified vegetable oil;
adding a second base product component, wherein the second base product component is selected from at least one of: nitrilotriethanol, monoethylene glycol, diethylene glycol, triethylene glycol, tetraethylene glycol, propylene glycol, dipropylene glycol, tripropylene glycol, 1,4-butanediol, nitrilodiethanol, nitrilomonoethanol, dimethylolpropane, pentaerythritol, sorbitol or a combination of these components;
heating the combination of the first base product component and the second base product component to a temperature between 90°C and 115°C if the melting point of the second base product component is below 115°C, or to a temperature comprised between 250°C and 300°C if the second base product component is pentaerythritol;
stirring the combination of the first base product component with the second base product component for a period of from 20 to 40 minutes at the temperature of the previous step.

22. Process for manufacturing a liquid base product, according to claim 21, **characterized in that** it further comprises the steps of:
cooling the product obtained after stirring the combination to room temperature;
adding a third base product component, wherein the third base product component is a polyether polyol; and
stirring the combination comprising the third base product component for a period of between 20 and 40 minutes at room temperature.

23. A process for manufacturing a liquid formulated product, **characterized in that** it comprises generating a liquid base product as defined in claim 18 or 19, wherein generating the formulated product comprises: shaking the liquid base product with at least one of: organic surfactants, catalysts and/or reagents, and gradually adding a blowing agent throughout the period of stirring the base product with organic surfactants, catalysts and/or reagents.

24. A process for manufacturing a liquid end product, **characterized in that** it comprises:
generating the liquid formulated product as defined in claim 20; and
stirring the liquid formulated product with an isocyanate until a reaction of the components takes place.

25. A process for manufacturing a biodegradable, renewable, flexible polymer, **characterized in that** it comprises:
generating a liquid end product as defined in claim 21; and
shaping the liquid end product via a polymerization reaction to obtain a biodegradable, renewable, flexible polymer.
